(19) Europäisches Patentamt
European Patent Office
Office européen des brevets

(11) EP 1 303 557 B1

# (12) EUROPÄISCHE PATENTSCHRIFT

(45) Veröffentlichungstag und Bekanntmachung des Hinweises auf die Patenterteilung:
**26.11.2003 Patentblatt 2003/48**

(21) Anmeldenummer: **01943204.6**

(22) Anmeldetag: **29.03.2001**

(51) Int Cl.$^7$: **C08G 77/388**, D06M 15/643

(86) Internationale Anmeldenummer:
**PCT/EP01/03593**

(87) Internationale Veröffentlichungsnummer:
**WO 02/010255 (07.02.2002 Gazette 2002/06)**

## (54) AMMONIUMGRUPPEN AUFWEISENDE ORGANOSILICIUMVERBINDUNGEN

ORGANOSILICON COMPOUNDS COMPRISING AMMONIUM GROUPS

COMPOSES D'ORGANOSILICIUM POSSEDANT DES GROUPES AMMONIUM

(84) Benannte Vertragsstaaten:
**DE**

(30) Priorität: **27.07.2000 DE 10036678**

(43) Veröffentlichungstag der Anmeldung:
**23.04.2003 Patentblatt 2003/17**

(73) Patentinhaber: **Wacker-Chemie GmbH**
**81737 München (DE)**

(72) Erfinder:
- **HERZIG, Christian**
**83329 Waging am See (DE)**
- **BANFIC, Robert**
**84508 Burgkirchen (DE)**

(74) Vertreter: **Deffner-Lehner, Maria, Dr. et al**
**Wacker-Chemie GmbH,**
**Hanns-Seidel-Platz 4**
**81737 München (DE)**

(56) Entgegenhaltungen:
**EP-A- 0 017 121**
**EP-A- 0 017 122**
**EP-A- 0 282 720**
**EP-A- 0 294 642**
**EP-A- 0 837 103**
**EP-A- 0 837 104**
**EP-A- 1 000 959**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 303 557 B1

## Beschreibung

Die Erfindung betrifft Ammoniumgruppen aufweisende Organosiliciumverbindungen und ein Verfahren zu ihrer Herstellung.

In US 4,101,272 (Commonwealth Scientific and Industrial Research Organization, ausgegeben am 18. Juli 1978) wird ein Verfahren zur Wollbehandlung beschrieben, bei dem Epoxysiloxane und Amine als separate Stoffe auf die Wolle aufgebracht werden und in situ reagieren unter Bildung von vernetzten nichtlöslichen Strukturen.

US 4,833,225 (Goldschmidt, ausgegeben am 23 Mai 1989) offenbart polyquaternäre Polysiloxanpolymere der Blockstruktur $(AB)_nA$, die durch Umsetzung von $\alpha,\omega$-Epoxysiloxanen mit di-tertiären Diaminen in Gegenwart von Säuren erhalten werden. Die Blockcopolymere enthalten quaternäre Stickstoffatome.

In US 5,807,956 (OSi Specialties, Inc., ausgegeben am 15. September 1998) sind Blockcopolymere mit $(AB)_nA$-Struktur, die Polyalkylenoxidketten enthalten, beschrieben. Die Herstellung erfolgt durch Umsetzung von $\alpha$, $\omega$-Epoxysiloxanen mit $\alpha,\omega$-Aminoalkylpolyethern, wobei wegen der sehr schlechten gegenseitigen Löslichkeit der Edukte größere Mengen an organischen Lösungsmitteln erforderlich sind um ausreichende Kompatibilität zu erzielen.

Es bestand die Aufgabe Ammoniumgruppen aufweisende Organosiliciumverbindungen bereitzustellen, die unvernetzt also löslich sind und die nach einem einfachen Verfahren ohne den Einsatz von größeren Mengen an organischen Lösungsmitteln hergestellt werden können, wobei lineare, verzweigte oder dendrimerartige Strukturen erhalten werden können und wobei die Viskosität in einem weiten Bereich eingestellt werden kann. Die Aufgabe wird durch die Erfindung gelöst.

Gegenstand der Erfindung sind Ammoniumgruppen aufweisende Organosiliciumverbindungen, die in Isopropanol oder Diethylenglycolmonobutylether löslich sind, enthaltend

(a) mindestens eine Struktureinheit der allgemeinen Formel

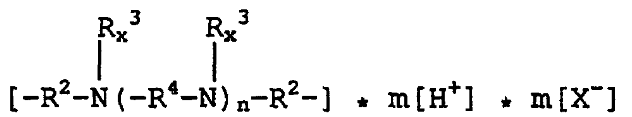 (I)

wobei $R^2$ ein zweiwertiger organischer Rest, der eine durch eine Ringöffnung einer Epoxygruppe bedingte Hydroxylgruppe enthält, ist

$R^3$ ein Wasserstoffatom oder einen einwertigen Kohlenwasserstoffrest mit 1 bis 60 Kohlenstoffatomen je Rest, der durch ein oder mehrere separate Heteroatome ausgewählt aus der Gruppe der Stickstoff-, Sauerstoff-, Schwefel- oder Halogenatome unterbrochen oder substituiert sein kann, bedeutet,

$R^4$ ein zweiwertiger Kohlenwasserstoffrest mit 1 bis 10 Kohlenstoffatomen je Rest ist,

n 0 oder eine ganze Zahl von 1 bis 10 ist

m eine ganze Zahl von 1 bis zur Gesamtanzahl der Stickstoffatome in (I), vorzugsweise eine ganze Zahl von 1 bis zur Summe aus n+1 und der Gesamtanzahl aller in den Resten $R^3$ gegebenenfalls enthaltenen basischen Stickstoffatome, ist und

x gleich oder verschieden ist und 0 oder 1 ist,

$X^-$ ein Anion, vorzugsweise ein Anion einer korrespondierenden Säure, ist,

(b) mindestens eine Siloxaneinheit der allgemeinen Formel

$$R_a(R^1O)_bSiO_{\frac{4-(a+b)}{2}} \qquad (II)$$

wobei R gleich oder verschieden ist und einen einwertigen gegebenenfalls halogenierten Kohlenwasserstoffrest mit 1 bis 18 Kohlenstoffatomen je Rest bedeutet,

$R^1$ gleich oder verschieden ist und einen einwertigen Kohlenwasserstoffrest mit 1 bis 8 Kohlenstoffatomen je Rest bedeutet,

a 0, 1, 2 oder 3 ist,

b 0, 1, 2 oder 3 ist,

mit der Maßgabe, dass die Summe $a+b \leq 3$ ist,

und

(c) mindestens zwei Siloxaneinheiten der allgemeinen Formel

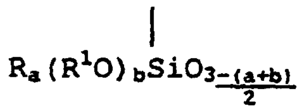 (III)

wobei R, $R^1$, a und b die oben dafür angegebene Bedeutung haben,
mit der Maßgabe, dass die Summe a+b≤2 ist und
dass die Siloxaneinheiten der Formel (III) über die Si-Atome mit der Struktureinheit der Formel (I) über die Reste $R^2$ verbunden sind.

Gegenstand der Erfindung sind weiterhin Ammoniumgruppen aufweisende Organosiliciumverbindungen herstellbar indem in einer ersten Stufe
(Poly)amine (1) der allgemeinen Formel

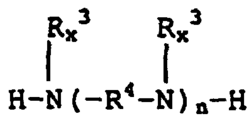 (IV)

wobei $R^3$, $R^4$, n und x die oben dafür angegebene Bedeutung haben, mit Epoxygruppen aufweisenden Organosiliciumverbindungen (2) enthaltend Einheiten der allgemeinen Formel

$$E_cR_a(R^1O)_bSiO_{\frac{4-(a+b+c)}{2}} \qquad (V)$$

wobei R, $R^1$, a und b die oben dafür angegebene Bedeutung haben, E gleich oder verschieden ist und einen einwertigen SiC-gebundenen organischen Rest, der eine Epoxygruppe enthält, bedeutet und
c 0 oder 1 ist,
mit der Maßgabe, dass die Summe a+b+c≤3 ist und dass mindestens ein Rest E je Molekül enthalten ist,
umgesetzt werden,
mit der Maßgabe, dass das eingesetzte Verhältnis von N-gebundenem Wasserstoff in (Poly)amin (1) zu Epoxygruppe in Organosiliciumverbindung (2) ein solches ist, dass in Toluol lösliche, Aminogruppen aufweisende Organosiliciumverbindungen erhalten werden,
und in einer zweiten Stufe
die in der ersten Stufe erhaltenen Aminogruppen aufweisenden Organosiliciumverbindungen durch Zugabe von Säuren (4) teilweise oder ganz protoniert werden, wobei Ammoniumgruppen aufweisende Organosiliciumverbindungen, die in Isopropanol oder Diethylenglycolmonobutylether löslich sind, erhalten werden.

Gegenstand der Erfindung ist weiterhin ein Verfahren zur Herstellung der Ammoniumgruppen aufweisenden Organosiliciumverbindungen, dadurch gekennzeichnet, dass
in einer ersten Stufe
(Poly)amine (1) der allgemeinen Formel

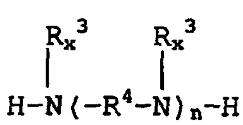 (IV)

wobei $R^3$, $R^4$, n und x die oben dafür angegebene Bedeutung haben, mit Epoxygruppen aufweisenden Organosiliciumverbindungen (2) enthaltend Einheiten der allgemeinen Formel

$$E_cR_a(R^1O)_bSiO_{\frac{4-(a+b+c)}{2}} \quad (V)$$

wobei R, $R^1$, a und b die oben dafür angegebene Bedeutung haben, E gleich oder verschieden ist und einen einwertigen SiC-gebundenen organischen Rest, der eine Epoxygruppe enthält, bedeutet und
c 0 oder 1 ist,
mit der Maßgabe, dass die Summe $a+b+c \leq 3$ ist und dass mindestens ein Rest E je Molekül enthalten ist,
umgesetzt werden,
mit der Maßgabe, dass das eingesetzte Verhältnis von N-gebundenem Wasserstoff in (Poly)amin (1) zu Epoxygruppe in Organosiliciumverbindung (2) ein solches ist, dass in Toluol lösliche, Aminogruppen aufweisende Organosiliciumverbindungen erhalten werden,
und in einer zweiten Stufe
die in der ersten Stufe erhaltenen Aminogruppen aufweisenden Organosiliciumverbindungen durch Zugabe von Säuren (4) teilweise oder ganz protoniert werden, wobei Ammoniumgruppen aufweisende Organosiliciumverbindungen, die in Isopropanol oder Diethylenglycolmonobutylether löslich sind, erhalten werden.

Nach dem erfindungsgemäßen Verfahren werden in der ersten Stufe als Aminogruppen aufweisende Organosiliciumverbindungen solche erhalten, die in Toluol löslich sind, d.h. es werden unvernetzte Organosiliciumverbindungen erhalten, im Gegensatz zu in Toluol unlöslichen Organosiliciumverbindungen, die vernetzt sind. Die erhaltenen Organosiliciumverbindungen sind in jedem Mischungsverhältnis in Toluol löslich, vorzugsweise sind sie bei einer Temperatur von 25°C und einem Druck von etwa bei 1020 hPa zu 100 Gewichtsprozent in Toluol löslich, wenn Organosiliciumverbindungen und Toluol im Verhältnis 1:1 (Gewichtsteile), bevorzugt 1:10 (Gewichtsteile,) gemischt werden.

Nach dem erfindungsgemäßen Verfahren werden in der zweiten Stufe als Ammoniumgruppen aufweisende Organosiliciumverbindungen solche erhalten, die in Isopropanol oder Diethylenglycolmonobutylether löslich sind, d.h. es werden unvernetzte Organosiliciumverbindungen erhalten, im Gegensatz zu in Isopropanol oder Diethylenglycolmonobutylether unlöslichen Organosiliciumverbindungen, die vernetzt sind. Die erhaltenen Organosiliciumverbindungen sind in jedem Mischungsverhältnis in Isopropanol oder Diethylenglycolmonobutylether löslich, vorzugsweise sind sie bei einer Temperatur von 25°C und einem Druck von etwa bei 1020 hPa zu 100 Gewichtsprozent in Isopropanol oder Diethylenglycolmonobutylether löslich, wenn Organosiliciumverbindungen und Isopropanol oder Diethylenglycolmonobutylether im Verhältnis 1:1 (Gewichtsteile), bevorzugt 1:10 (Gewichtsteile,) gemischt werden.

Die erfindungsgemäßen Ammoniumgruppen aufweisenden Organosiliciumverbindungen enthalten Siloxanblöcke, die über mindestens einen zwei- oder mehrwertigen Ammoniumrest miteinander verbunden sind. Vorzugsweise beträgt der Gehalt an Amoniumstickstoff 0,01 bis 5,0 Gew.-%, bevorzugt 0,1 bis 5,0 Gew.-%, jeweils bezogen auf das Gesamtgewicht der Ammoniumgruppen aufweisenden Organosiliciumverbindungen.

Die erfindungsgemäßen Ammoniumgruppen aufweisenden Organosiliciumverbindungen haben vorzugsweise einen Viskosität von 50 - 5.000.000 mPa.s bei 25°C, bevorzugt 100 - 100.000 mPa.s bei 25°C.

Beispiele für Reste R sind Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Bevorzugt ist R ein Methylrest.

Beispiele für Reste $R^1$ sind Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Vorzugsweise ist $R^2$ ein Rest der allgemeinen Formel

$$(Si)\text{-}(R^5)_z\text{-}CR^6(OH)\text{-}CR^6{}_2\text{-}(N) \quad (VI)$$

oder

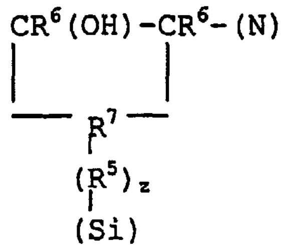

(VII)

wobei (Si)- die Bindung zum Siliciumatom der Siloxaneinheit der Formel (III) und -(N) die Bindung zum Stickstoffatom der Struktureinheit der Formel (I) bedeutet,
$R^5$ ein zweiwertiger Kohlenwasserstoffrest mit 1 bis 10 Kohlenstoffatomen je Rest ist, der durch ein Ethersauerstoffatom substituiert sein kann,
$R^6$ ein Wasserstoffatom oder ein einwertiger Kohlenwasserstoffrest mit 1 bis 10 Kohlenstoffatomen je Rest ist, der durch ein Ethersauerstoffatom substituiert sein kann,
$R^7$ einen dreiwertigen Kohlenwasserstoffrest mit 3 bis 12 Kohlenstoffatomen je Rest ist und
z 0 oder 1 ist.

Beispiele für Reste $R^2$ sind aliphatische, cycloaliphatische und aromatenhaltige zweiwertige organische Reste, die Hydroxyfunktionen aus der Epoxidringöffnung enthalten, wie

$$-CH(OH)CH_2-(N)$$

$$-(CH_2)_rCH(OH)CH_2-(N)$$

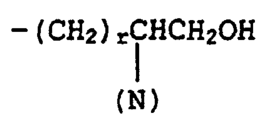

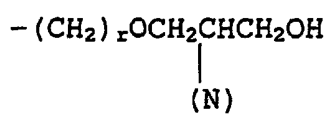

$$-(CH_2)_rOCH_2CH(OH)CH_2-(N)$$

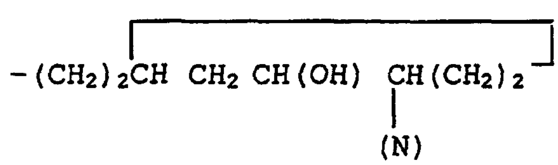

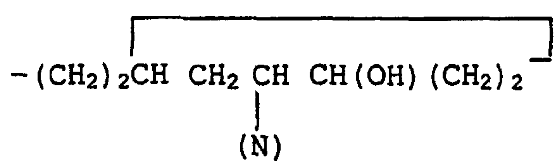

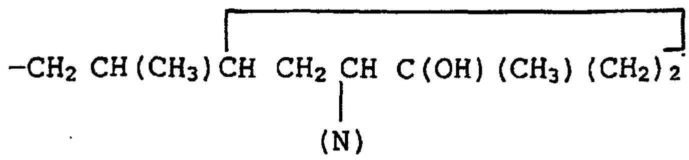

$$-(CH_2)_2C_6H_4CH(OH)CH_2-(N)$$

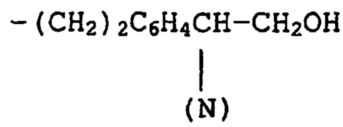

wobei r eine ganze Zahl von 1 bis 20, bevorzugt von 2 bis 8, ist, und -(N) die Bindung zum Stickstoffatom der Struktureinheit der Formel (I) bedeutet.

Bevorzugte Reste $R^2$ sind

$$-(CH_2)_3OCH_2CH(OH)CH_2-(N)$$

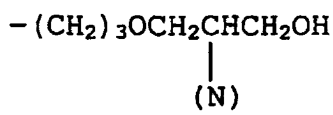

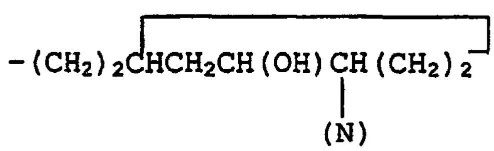

und

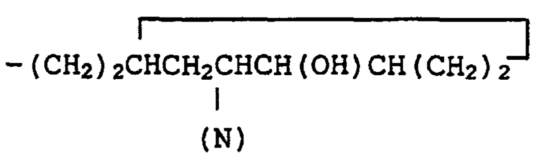

wobei die beiden ersten Reste besonders bevorzugt sind.

Beispiele für Kohlenwasserstoffreste $R^3$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest, Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für halogenierte Reste $R^3$ sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Beispiele für durch ein Stickstoffatom substituierte Reste $R^3$ sind

$- C_2H_4NEt_2$ bzw. $-C_2H_4N^+HEt_2 * X^-$

$- C_2H_4NMe_2$ bzw. $-C_2H_4N^+HMe_2 * X^-$

$- C_3H_6NMe_2$ bzw. $-C_3H_6N^+HMe_2 * X^-$

$- C_3H_6NEt_2$ bzw. $-C_3H_6N^+HEt_2 * X^-$

$- C_4H_8NMe_2$ bzw. $-C_4H_8N^+HMe_2 * X^-$

$- C_2H_4NMeC_2H_4NMe_2$ bzw. $-C_2H_4N^+HMeC_2H_4N^+HMe_2 * 2X^-$

$-C_3H_6NEtC_3H_6NEt_2$ bzw. $-C_3H_6N^+HEtC_3H_6N^+HEt_2 * 2X^-$

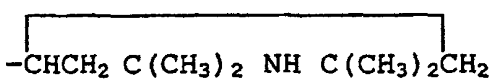 bzw. 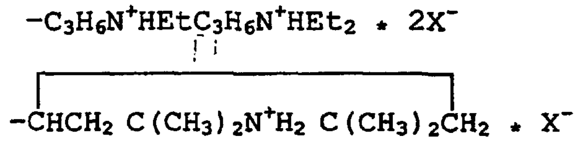

und

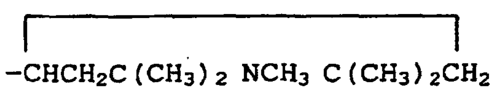 bzw. 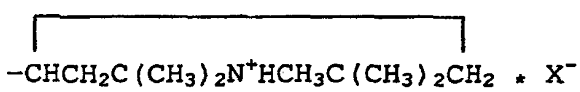

wobei Me ein Methylrest und Et ein Ethylrest bedeutet.

Beispiele für durch ein Sauerstoffatom substituierte Reste $R^3$ sind

$- (C_2H_4O)_sR$

$- (C_3H_6O)_sR,$

$-(C_2H_4O)_s(C_3H_6O)_sR$

und

$- (C_4H_8O)_sR ,$

wobei s eine ganze Zahl von 1 bis 30, bevorzugt 1 bis 20, ist und R die oben dafür angegebene Bedeutung hat, bevorzugt ein Methyl- oder Butylrest bedeutet.

Beispiele für durch ein Stickstoff- und ein Sauerstoffatom substituierte Reste $R^3$ sind

$-(C_2H_4O)_sC_3H_6NR^1{}_2$ bzw. $-(C_2H_4O)_sC_3H_6N^+HR^1{}_2 * X^-$

$$-(C_3H_6O)_sC_3H_6NR^1{}_2 \quad \text{bzw.} \quad -(C_3H_6O)_sC_3H_6N^+HR^1{}_2 * X^-$$

und

$$-(C_2H_4O)_s(C_3H_6O)_sC_3H_6NR^1{}_2 \quad \text{bzw.} \quad -(C_2H_4O)_s(C_3H_6O)_sC_3H_6N^+HR^1{}_2 * X^-,$$

wobei s, $R^1$ und $X^-$ die oben dafür angegebene Bedeutung haben und $R^1$ bevorzugt ein Methyl- oder Ethylrest bedeutet.

Beispiele für durch ein Schwefelatom substituierte Reste $R^3$ sind

$$-(C_2H_4S)_sR$$

und

$$-(C_3H_6S)_sR,$$

wobei s und R die oben dafür angegebene Bedeutung haben und R bevorzugt ein Methyl-, Ethyl- oder Butylrest bedeutet.

Beispiele für Reste $R^4$ sind

$$-(CH_2)_2-$$

$$-(CH_2)_3-$$

$$-CH_2CH(CH_3)-$$

$$-(CH_2)_4-$$

$$-CH_2C(CH_3)_2CH_2-$$

$$-(CH_2)_6-$$

$$-(CH_2)_8-$$

$$-(CH_2)_{10}-$$

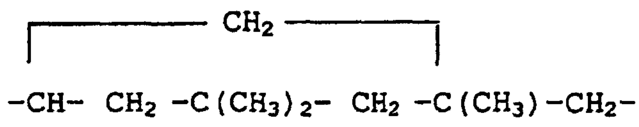

wobei Reste mit mindestens drei Kohlenstoffatomen bevorzugt sind und besonders bevorzugt die Reste

$$-(CH_2)_3-, -(CH_2)_6-, -CH_2C(CH_3)_2CH_2-$$

und

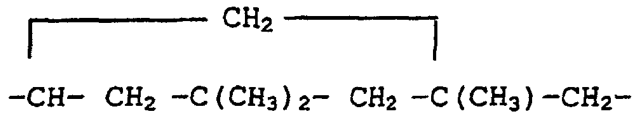

sind.

n ist vorzugsweise 0, 1, 2, 3, 4, 5, 6, 7, 8, 9 und 10.

Bei dem erfindungsgemäßen Verfahren kann eine Art von (Poly)amin (1) oder verschiedene Arten von (Poly)aminen (1) eingesetzt werden.

Beispiele für (Poly)amine (1) sind
primäre Alkylamine der allgemeinen Formel $R^3$-$NH_2$,
wobei $R^3$ ein Alkylrest ist,
primäre Amine der allgemeinen Formel $R^3$-$NH_2$,
wobei $R^3$ ein durch ein Stickstoffatom substituierter Rest ist,
wie

$$Me_2NC_2H_4NH_2$$

$$Et_2NC_2H_4NH_2$$

$$Me_2NC_3H_6NH_2$$

$$Et_2NC_3H_6NH_2$$

$$Me_2NC_4H_8NH_2$$

$$Me_2NC_2H_4NMeC_2H_4NH_2$$

$$Et_2NC_3H_6NEtC_3H_6NH_2$$

4-Amino-2,2,6,6-tetramethylpiperidin,
4-Amino-1,2,2,6,6-pentamethylpiperidin, und
N-(2-Aminoethyl)piperazin,

primäre Amine der allgemeinen Formel $R^3$-$NH_2$, wobei $R^3$ ein durch ein Sauerstoffatom substituierter Rest ist, wie

$$EtO(C_2H_4O)_sC_3H_6NH_2$$

$$BuO(C_3H_6O)_sC_3H_6NH_2$$

$$MeO(C_2H_4O)_s(C_3H_6O)_sC_3H_6NH_2$$

und

$$MeO(C_4H_8O)_sC_3H_6NH_2$$

primäre Amine der allgemeinen Formel $R^3$-$NH_2$,
wobei $R^3$ ein durch ein Sauerstoff- und ein Stickstoffatom substituierter Rest ist, wie

$$Me_2NC_3H_6(C_2H_4O)_sC_3H_6NH_2$$

und

$$Et_2N(C_3H_6O)_s(C_2H_4O)_sC_3H_6NH_2,$$

wobei wobei s die oben dafür angegebene Bedeutung hat,
Me ein Methylrest, Et ein Ethylrest und Bu ein n-Butylrest bedeutet.

Weitere Beispiele für (Poly)amine (1) sind
Ethylendiamin, Propylendiamin, Diethylentriamin, Dipropylentriamin, Triethylentetramin und Tetraethylenpentamin.

Die Reste E sind vorzugsweise solche der Formel

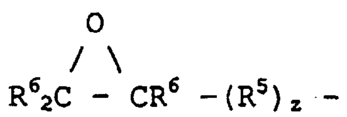 (VI´)

oder

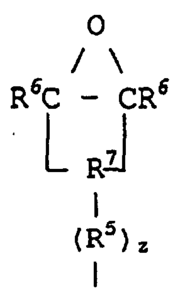 (VII´)

wobei $R^5$, $R^6$, $R^7$ und z die oben dafür angegebene Bedeutung haben.

In Formel (V) ist vorzugsweise:

a durchschnittlich 1,0 bis 2,0 und
c durchschnittlich 0,002 bis 1,0.

Bei dem erfindungsgemäßen Verfahren kann eine Art von Organosiliciumverbindung (2) oder verschiedene Arten von Organosiliciumverbindungen (2) eingesetzt werden.

Bei dem erfindungsgemäßen Verfahren werden bevorzugt als Epoxygruppen aufweisende Organosiliciumverbindungen (2) solche der allgemeinen Formel

$$E_dR_{3-d}SiO(SiR_2O)_o(SiREO)_pSiR_{3-d}E_d \qquad (VIII),$$

wobei R und E die oben dafür angegebene Bedeutung haben,
d 0 oder 1, insbesondere 1,
o 0 oder eine ganze Zahl von 1 bis 1000, insbesondere 5 bis 200, und
p 0 oder eine ganze Zahl von 1 bis 10, insbesondere 0 oder 1 bis 6, besonders bevorzugt 0, ist,
eingesetzt.

Die Epoxygruppen aufweisenden Organosiliciumverbindungen (2) haben vorzugsweise eine Viskosität von 1 bis 100.000 mPa.s bei 25°C, bevorzugt 10 bis 2.000 mPa.s bei 25°C.

Beispiele für Reste E sind
3,4-Epoxibutyl,
5,6-Epoxihexyl,
7,8-Epoxioctyl,
Glycidoxyethyl,
Glycidoxypropyl,
2-(3,4-Epoxicyclohexyl)ethyl,
2-(3-Epoxiphenyl)ethyl
sowie der Epoxirest selbst,
wobei der Glycidoxypropyl- und der 2-(3,4-Epoxicyclohexyl)ethyl bevorzugt sind, insbesonders der Glycidoxypropylrest.

Verfahren zur Herstellung von Epoxygruppen aufweisenden Organosiliciumverbindungen (2) sind dem Fachmann bekannt. Bevorzugte Ausführungen sind die Epoxidation von aliphatisch ungesättigten Organopolysiloxanen und die durch Edelmetall(verbindungen) katalysierte Addition endständig ungesättigter organischer Epoxiverbindungen, wie Allylglycidether oder 4-Vinylcyclohexenoxyd an Organopolysiloxane, die Si-gebundenen Wasserstoff enthalten.

Die bei dem erfindungsgemäßen Verfahren eingesetzten Epoxygruppen aufweisenden Organosiliciumverbindungen (2) enthalten pro Molekül bevorzugt 1 bis 10, insbesondere 1 bis 6 Epoxygruppen. Eine besonders bevorzugte Ausführung ist die Verwendung von $\alpha,\omega$-Diepoxypolysiloxanen.

Bei dem erfindungsgemäßen Verfahren zur Ringöffnung und Polyaddition der Epoxifunktionen mit (Poly)aminen (1) sind Amine mit mindestens 2 N-gebundenen Wasserstoffatomen erforderlich. Bevorzugt werden (Poly)amine (1) mit 2 bis 10 N-gebundenen Wasserstoffatomen, insbesondere mit 2 bis 6 N-gebundenen Wasserstoffatomen verwendet. bie Anzahl der Stickstoffatome pro Molekül ist davon zunächst unabhängig, beträgt aber bevorzugt 1 bis 4.

Bei dem erfindungsgemäßen Verfahren können gegebenenfalls Amine (3) mit nur einer N-H-Gruppe pro Molekül mitverwendet werden, da diese als Endstopper fungieren und so die Polyaddition kontrollierbarer machen. Gegebenenfalls mitverwendete Amine (3) sind vorzugsweise solche der allgemeinen Formel

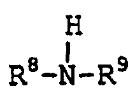

(IX)

wobei $R^8$ und $R^9$ gleich oder verschieden sind und einen einwertigen Kohlenwasserstoffrest mit 1 bis 60 Kohlenstoffatomen je Rest bedeuten, der durch ein oder mehrere separate Heteroatome ausgewählt aus der Gruppe von Stickstoff- und Sauerstoffatomen unterbrochen sein kann, oder
$R^8$ und $R^9$ zusammen einen zweiwertigen Kohlenwasserstoffrest mit 4 bis 10 Kohlenstoffatomen bedeuten.

Beispiele für Amine (3) sind
Dibutylamin, Piperidin, Diethanolamin, Trimethylethylendiamin, Bis-(2-diethylaminoethyl)amin und Bis-(3-dimethylaminopropyl)amin.

Amine (3) werden gegebenenfalls vorzugsweise in Mengen von 5 bis 40 Gew.-% , bezogen auf das Gesamtgewicht der (Poly)amine (1) eingesetzt.

Bei dem erfindungsgemäßen Verfahren beträgt das Verhältnis von (Poly)aminen (1) zu Epoxygruppen aufweisenden Organosiliciumverbindungen (2) vorzugsweise 1:1 bis 10:1, bevorzugt 1:1 bis 5:1 und besonders bevorzugt 1:1 bis 4:1.

Bei dem erfindungsgemäßen Verfahren orientiert sich die Stöchiometrie der Reaktion am Verhältnis von N-gebundenem Wasserstoff in (1) zu Epoxygruppen in (2) (N-H/Epoxi). Dieses Verhältnis N-H/Epoxi kann in weiten Bereichen variiert werden, je nach Art der Einsatzstoffe und Zielbereich der Viskositäten der erfindungsgemäßen Organosiliciumverbindungen. Vorzugsweise wird aber ein N-H/Epoxi-Verhältnis von größer gleich $\geq 1$ eingestellt, damit sämtliche Epoxygruppen abreagieren können unter der Bedingung, dass in Toluol lösliche Produkte, d.h. unvernetzte Produkte erhalten werden. Es liegt im Wissen des Fachmannes abhängig von der Anzahl der N-H-Gruppen in (1) und Epoxygruppen in (2), also der Funktionalität der Edukte, bei dem erfindungsgemäßen Verfahren das N-H/Epoxi-Verhältnis so einzustellen z.B. experimentell über das Durchführen von Versuchen, dass in Toluol lösliche Produkte erhalten werden. Da auch Nebenreaktionen sowie unvollständige Reaktionsfolgen mit Umsätzen unter 100 % der Theorie Einfluss nehmen, weiß der Fachmann, dass eventuelle Grenzwerte experimentell zu bestimmen sind, falls besonders viskose Produkte hergestellt werden sollen.

Die erfindungsgemäßen Ammoniumgruppen aufweisenden Organosiliciumverbindungen werden erhalten indem die aus (1) und (2) gegebenenfalls unter Mitverwendung von (3) in der ; ersten Stufe des erfindungsgemäßen Verfahrens erhaltenen Aminogruppen aufweisenden Organosiliciumverbindungen in einer zweiten Stufe mit Säuren (4) umgesetzt werden.

Bei dem erfindungsgemäßen Verfahren kann eine Art von Säure (4) oder verschiedene Arten von Säuren (4) eingesetzt werden.

Vorzugsweise werden als Säuren (4) wasserlösliche organische oder anorganische Säuren (4) eingesetzt.

Beispiele für Säuren (4) sind
Monocarbonsäuren der allgemeinen Formel R'-COOH (Xa),
wobei R' ein Wasserstoffatom oder ein Kohlenwasserstoffrest mit 1 bis 18 Kohlenstoffatomen je Rest bedeutet, wie Ameisensäure, Essigsäure, Propionsäure, Buttersäure, Pivalinsäure, Sorbinsäure, Benzoesäure, Salicylsäure und Toluylsäure,
und Dicarbonsäuren der allgemeinen Formel HOOC-$R^5$-COOH (Xb) ,
wobei $R^5$ die oben dafür angegebene Bedeutung hat, wie Bernsteinsäure, Maleinsäure, Adipinsäure, Malonsäure und Phthalsäure,
wobei die Monocarbonsäuren bevorzugt sind.
Besonders bevorzugt sind Ameisensäure, Essigsäure und Propionsäure.

Weitere Beispiele für Säuren (4) sind Sulfonsäuren der allgemeinen Formel R'-$SO_3H$ (Xc) ,
wobei R' die oben dafür angegebene Bedeutung hat, wie Methansulfonsäure, Butansulfonsäure, Trifluormethansulfonsäure und Toluolsulfonsäure,
sowie anorganische Säuren, wie Salzsäure, Bromwasserstoffsäure, Schwefelsäure und Phosphorsäure.

Beispiele für Kohlenwasserstoffrest R' sind die Kohlenwasserstoffreste R.

Dementsprechend enthalten die erfindungsgemäßen Organosiliciumverbindungen vorzugsweise die korrespondierenden Anionen X- der eingesetzten Säuren. Bevorzugt ist $X^-$ ein Anion einer korrespondierenden wasserlöslichen organischen oder anorganischen Säure. Beispiele für Anionen $X^-$ sind daher R'-$COO^-$ (Xa'), $^-$OOC-$R^5$-$COO^-$ (Xb') und R'-$SO_3^-$ (Xc') wobei R' und $R^5$ die oben dafür angegebene Bedeutung haben. Werden also die Reaktionsprodukte aus (1) und (2) in der zweiten Stufe des erfindungsgemäßen Verfahrens beispielsweise mit Essigsäure umgesetzt, enthalten die erfindungsgemäßen Organosiliciumverbindungen die zu den protonierten Stickstoffatomen korrespondierenden Acetatanionen.

Die Säuren (4) werden in der zweiten Stufe des erfindungsgemäßen Verfahrens vorzugsweise in Mengen von 0,1 bis 2,0 Grammequivalent, bevorzugt von 0,5 bis 1,5 Grammequivalent, jeweils bezogen auf den Aminstickstoff der in der ersten Stufe erhaltenen Aminogruppen aufweisenden Organosiliciumverbindungen, eingesetzt.

Enthält also 1 kg der in der ersten Stufe erhaltenen Aminogruppen aufweisenden Organosiliciumverbindungen 14 g basischen Stickstoff, so werden beispielsweise vorzugsweise 6 bis 120 g Essigsäure, bevorzugt 30 bis 90 g Essigsäure verwendet. Der Einsatz von 6 bis 60 g Essigsäure führt in diesem Beispiel zu einer Teilprotonierung, d.h. nicht alle basischen Stickstoffatome der in der ersten Stufe erhaltenen Aminogruppen aufweisenden Organosiliciumverbindungen werden protoniert. Bei Einsatz von 60 g Essigsäure und mehr werden vollprotonierte Produkte erhalten, wobei der Überschuß der Säure den pH-Wert der erfindungsgemäßen Ammoniumgruppen aufweisenden Organosiliciumverbindungen regelt. Durch noch höhere Säurezugabe kann der pH-Wert der erfindungsgemäßen Organosiliciumverbindungen zu noch tieferen Werten abgesenkt werden. Derartige Mischungen zeigen die Charakteristik gepufferter Systeme.

Bevorzugt werden alle Stickstoffatome in den erfindungsgemäßen Organosiliciumverbindungen protoniert, wobei auch die gegebenenfalls in den Resten $R^3$ enthaltenen Stickstoffatome protoniert sind, so dass als Struktureinheit der Formel (I) bevorzugt solche der Formel

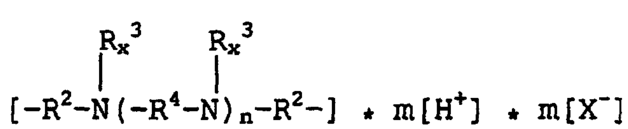

(I)

bzw. in anderer Schreibweise

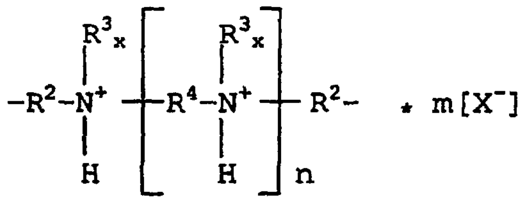 (I´)

wobei m gleich der Summe aus n+1 und der Gesamtanzahl aller in den Resten $R^3$ gegebenenfalls enthaltenen basischen Stickstoffatome ist,
[also höchstens m=n+1+(n+1)Σ(N-Atome in $R^3$)]
$R^2$, $R^3$, $R^4$ und $X^-$ die oben dafür angegebene Bedeutung haben, mit der Maßgabe, dass die gegebenenfalls in $R^3$ enthaltenen basischen Stickstoffatome protoniert sind,
erhalten werden.

Die Endgruppen bei den in der ersten Stufe des erfindungsgemäßen Verfahrens erhaltenen Organosiliciumverbindungen sind - abhängig von dem eingesetzten N-H/Epoxi-Verhältnis aus (1) und (2) und den gegebenenfalls eingesetzten Aminen (3) - vorzugsweise Aminogruppen, die von (1) oder (3) stammen, können aber auch z.B. durch unvollständigen Umsatz Epoxygruppe, die von (2) stammen, sein.

Vorzugsweise können die erfindungsgemäßen Organosiliciumverbindungen daher

(d) Endeinheiten der allgemeinen Formel

$$GR_a(R^1O)_bSiO_{\frac{3-(a+b)}{2}} \qquad (XI)$$

wobei R, $R^1$, a und b die oben dafür angegebene Bedeutung haben, und
G ein Rest der Formel

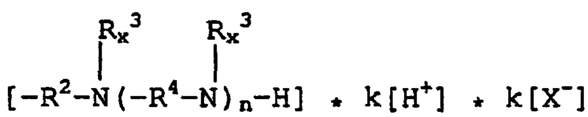 (XII)

oder

$$[-R^2-NR^8R^9] * l[H^+] * l[X^-] \qquad (XIII)$$

oder der Rest E ist,
wobei $R^2$, $R^3$, $R^4$, $R^8$, $R^9$, n und E die oben dafür angegebene Bedeutung haben,
k eine ganze Zahl von 1 bis zur Gesamtanzahl der Stickstoffatome in (XII) ist, vorzugsweise 1 bis zur Summe aus n+1 und der Gesamtanzahl aller in den Resten $R^3$ gegebenenfalls enthaltenen basischen Stickstoffatome ist,
l eine ganze Zahl von 1 bis zur Summe aus 1 und der Gesamtanzahl aller in $R^8$ und $R^9$ gegebenenfalls enthaltenen basischen Stickstoffatome ist,

enthalten.

Da bevorzugt alle Stickstoffatome bei dem erfindungsgemäßen Verfahren protoniert werden, enthalten die erfindungsgemäßen Organosiliciumverbindungen bevorzugt als Endeinheiten solche der Formel

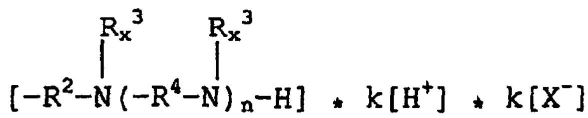 (XII)

oder

$$[-R^2-NR^8R^9] * l[H^+] * l[X^-] \qquad (XIII)$$

bzw. in anderer Schreibweise

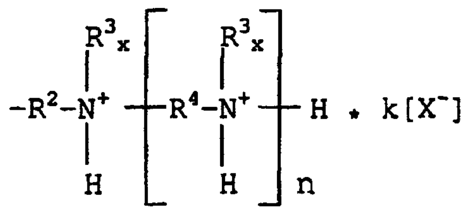 (XII´)

oder

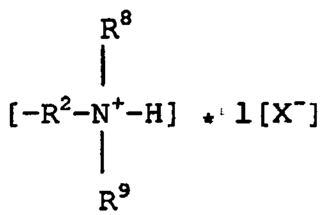 (XIII´)

wobei $R^2$, $R^3$, $R^4$, $R^8$, $R^9$ und $X^-$ die oben dafür angegebene Bedeutung haben, mit der Maßgabe, dass die gegebenenfalls in $R^3$, $R^8$ und $R^9$ enthaltenen basischen Stickstoffatome protoniert sind,
k gleich der Summe aus n+1 und der Gesamtanzahl aller in den Resten $R^3$ gegebenenfalls enthaltenen basischen Stickstoffatome ist, und
1 gleich der Summe aus 1 und der Gesamtanzahl aller in $R^8$ und $R^9$ gegebenenfalls enthaltenen basischen Stickstoffatome ist.

Bei dem erfindungsgemäßen Verfahren können inerte, organische Lösungsmittel mitverwendet werden, obwohl die Mitverwendung von inerten, organischem Lösungsmittel nicht bevorzugt ist.

In der ersten Stufe des erfindungsgemäßen Verfahrens ist die Mitverwendung von Säuren während der Umsetzung von (1) und (2) nicht bevorzugt und das erfindungsgemäße Verfahren wird in der ersten Stufe bevorzugt im pH-Bereich > 7 ausgeführt.

Die Verwendung von Säuren erfolgt bevorzugt erst nach Abschluß der Reaktion von (1) mit (2) in der zweiten Stufe des erfindungsgemäßen Verfahrens.

Zur Herstellung der erfindungsgemäßen Organosiliciumverbindungen in der ersten Stufe des erfindungsgemäßen Verfahrens sind grundsätzlich keine Katalysatoren nötig. Sofern gewünscht, können aber Katalysatoren verwendet werden, bevorzugt diejenigen, die auch als Beschleuniger der Epoxidhärtung dienen. Geeeignete Katalysatoren zur beschleunigten Herstellung der erfindungsgemäßen Organosiliciumverbindungen sind Phenole, sec. Alkohole oder text. Amine.

Das erfindungsgemäße Verfahren wird in der ersten Stufe vorzugsweise bei Temperaturen über 25°C durchgeführt, obwohl auch bei normaler Umgebungstemperatur bereits eine nachweisbare Reaktion erfolgt. Im Interesse eines schnellen und vollständigen Reaktionsablaufes sind aber Temperaturen über 60°C bevorzugt, insbesonders im Bereich von 80 bis 180°C, besonders bevorzugt zwischen 100 und 150°C. Das erfindungsgemäße Verfahren wird vorzugsweise beim Druck der umgebenden Atmosphäre, also bei etwa 1000hPa, durchgeführt, wobei besonders bei flüchtigen (Poly)aminen (1) ein erhöhter Druck von Vorteil ist, um Verluste von N-H-Funktionen durch Abdampfen und

damit eine Stöchiometrieänderung zu vermeiden.

Das erfindungsgemäße Verfahren kann sowohl als Dosier- als auch als Eintopfverfahren durchgeführt werden, bei dem die Komponenten (1) und (2) und gegebenenfalls (3) von Beginn an homogen vermischt vorliegen.

Das erfindungsgemäße Verfahren kann absatzweise, halbkontinuierlich oder vollkontinuierlich durchgeführt werden.

Die nach der Umsetzung von (1) mit (2) erhaltenen Aminogruppen aufweisenden Organosiliciumverbindungen haben basische Eigenschaften, wie sie auch von marktüblichen Aminölen bekannt sind. Sie können daher mit Säuren unter Salzbildung reagieren und somit ihre Löslichkeitseigenschaften ändern. Je nach Struktur und Aminzahl können somit hydrophile Eigenschaften erzeugt werden mit der Folge, dass solche Produkte erhalten werden können, die in Wasser selbstemulgierbar oder sogar löslich sind.

Gegenüber herkömmlichen Ammoniumsiloxanen haben die erfindungsgemäßen Organosiliciumverbindungen den Vorteil, daß nahezu beliebige Strukturen auf sehr einfache und wirtschaftliche Weise aufgebaut werden können. Die Herstellung von Ammoniumsiloxanen gemäß dem Stand der Technik beruht auf der Verwendung von Aminosilanen, die in Folgeschritten (Hydrolyse, Kondensation, Equilibrierung) in Polysiloxane übergeführt werden. Aufgrund der wenigen kommerziell erhältlichen Monomeren ist die Variabilität dieses Syntheseweges naturgemäß sehr begrenzt.

Die vorliegende Erfindung ermöglicht dagegen über polymeranaloge Umsetzungen den Zugang zu einer außergewöhnlich hohen Vielfalt von Ammoniumsiloxanen aus der großen Palette kommerzieller organischer Amine oder Polyamine und damit die Funktionalisierung der Siloxanvorstufe, den gleichzeitigen Polymeraufbau und die Protonierung in **einem** Reaktionsschritt.

Die erfindungsgemäßen Organosiliciumverbindungen können auf Gebieten eingesetzt werden, wo auch bisher Ammoniumsiloxane verwendet werden, schwerpunktmäßig als Weichmacher für Substrate wie Fasern, Textilien, Haare; also polymerbasierende natürliche oder synthetische Substrate. Eine Verwendung als unverdünnte Öle/Polymere ist zwar in Spezialfällen möglich, doch ist die Applikation aus wässriger Lösung, Emulsion oder Dispersion bevorzugt.

Zur Stabilisierung solcher verdünnter Darreichungsformen sind in vielen Fällen nicht-wässrige, aber mit Wasser kompatible Lösemittel von Vorteil, wie Isopropanol, Diethylenglykolmonomethylether, Diethylenglykolmonobutylether, Dipropylenglykol oder Dipropylenglykolmonomethylether.

Diese Lösemittel können vor oder nach der Zugabe von Säuren (4) zugesetzt werden. Bevorzugt ist aber die Zugabe solcher Lösemittel vor einer Verdünnung mit Wasser.

Falls gewünscht, können auch Emulgatoren zur Herstellung wässriger Verdünnungen eingesetzt werden, wobei nicht-ionische bevorzugt sind.

Gegenstand der Erfindung ist weiterhin ein Verfahren zur Imprägnierung von organischen Fasern mit den erfindungsgemäßen Organosiliciumverbindungen.

Nach dem erfindungsgemäßen Verfahren zur Imprägnierung von organischen Fasern können alle organischen Fasern in Form von Fäden, Garnen, Vliesen, Matten, Strängen, gewebten, gewirkten oder gestrickten Textilien imprägniert werden, die auch bisher mit Organosiliciumverbindungen imprägniert werden konnten. Beispiele für Fasern, die imprägniert werden können, sind solche aus Keratin, insbesondere Wolle, Polyvinylalkohol, Mischpolymere von Vinylacetat, Baumwolle, Rayon, Hanf, natürliche Seide, Polypropylen, Polyethylen, Polyester, Polyurethan, Polyamid, Cellulose und Gemische aus mindestens zwei solcher Fasern. Wie aus der vorstehenden Aufzählung ersichtlich, können die Fasern natürlicher oder synthetischer Herkunft sein. Die Textilien können in Form von Stoffbahnen oder Kleidungsstücken bzw. Teilen von Kleidungsstücken vorliegen.

Die bei dem erfindungsgemäßen Verfahren eingesetzten Organosiliciumverbindunqen können in unverdünnter Form oder in Form von Lösungen in organischem Lösungsmittel oder in Form von wässrigen Emulsionen auf die zu imprägnierende Faser aufgetragen werden. Werden dabei wässrige Emulsionen eingesetzt, so können diese Emulsionen, zusätzlich zu Wasser, Dispergiermittel und den zu dispergierenden Organosiliciumverbindungen Verdickungsmittel, wie Poly-N-vinylpyrrolidon, enthalten. Vorzugsweise werden bei der Imprägnierung als erfindungsgemäße Organosiliciumverbindungen solche eingesetzt, die in Wasser selbstemulgierbar oder löslich sind. Die bei der Imprägnierung eingesetzten erfindungsgemäßen Organosiliciumverbindungen können auch in Form wässriger Emulsionen auf die zu imprägnierenden Fasern aufgetragen werden. Als Dispergiermittel in diesen Emulsionen werden vorzugsweise nichtionische, anionische oder kationische Emulgatoren verwendet. Die Herstellung dieser Emulsionen kann in für die Emulgierung von Organopolysiloxanen bekannter Weise erfolgen.

Das Auftragen auf die zu imprägnierenden Fasern kann in beliebiger für die Imprägnierung von Fasern geeigneter und vielfach bekannter Weise erfolgen, z. B. durch Tauchen, Streichen, Gießen, Sprühen, einschließlich Sprühen aus Aerosolverpackung, Aufwalzen, Klotzen oder Drucken.

Weiterhin können die erfindungsgemäßen Organosiliciumverbindungen auch in Formulierungen wie Cremes, Rasierschäumen, Shampoos, Waschlotionen, Seifen, Doedorants oder Haarsprays verwendet werden.

Ein weiterer Schwerpunkt ist die Verwendung zur Behandlung von mineralischen Stoffen, speziell zur Hydrophobierung von Oberflächen. Bevorzugt sind hierbei silikatische Oberflächen, auf denen die erfindungsgemäßen Organosiliciumverbindungen besonders gute Adhäsion zeigen. Gegenstand der Erfindung ist daher ein Verfahren zur Imprägnierung von silikatischen Oberflächen, insbesondere Glas, Keramik und Naturstein mit den erfindungsgemäßen Organosiliciumverbindungen.

Beispiel 1:

($R^3$ = $-(CH_2)_7CH_3$, x = 1, n = O)

Es wird eine homogene Mischung aus 159,6 g eines α,ω-Bis-(glycidyloxypropyl)polydimethylsiloxans der Kettenlänge Si-13 und 24,3 g n-Octylamin hergestellt und diese wird bei 130°C drei Stunden lang reagieren gelassen, wobei die Viskosität stark zunimmt und das Öl einen gelblichen Farbton annimmt. Es wird ein fast quantitativer Umsatz der Epoxygruppen ($^1$H-NMR) und eine Endviskosität von 6.350 $mm^2/s$ bei 25°C erreicht. Das Öl hat eine Aminzahl von 0,98 (mequ./g) und ist in Toluol im Verhältnis 1:1 (Gewichtsteile) löslich. Das Produkt wird mit 13,5 g Essigsäure homogen vermischt und ist danach in Isopropanol wie auch in Wasser löslich.

Beispiel 2:

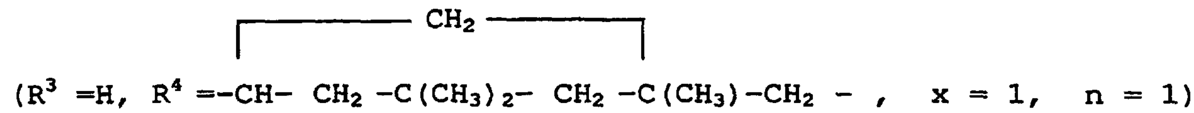

150 g eines α,ω-Bis-(glycidyloxypropyl)-polydimethylsiloxans der durchschnittlichen Kettenlänge Si-51 werden mit 8,02 g Isophorondiamin und 4,5 g Isopropanol homogen vermischt und 24 Stunden bei 110°C gehalten. Es wird ein Siloxanpolymer mit 60 Pa.s bei 25°C erhalten, das sich in der gleichen Menge Toluol klar auflöst und frei von Gelanteilen ist. Im $^1$H-NMR-Spektrum sind keine Epoxiprotonen mehr erkennbar (Nachweisgrenze ca. 1%). Das aminofunktionelle Siloxanpolymer hat eine Aminzahl von 0, 59 (mequ. /g) .

108,40 g Polymer werden in der gleichen Menge Diethylenglykolmonobutylether gelöst und mit 5 g Essigsäure versetzt. Die Viskosität dieser Lösung beträgt 2.290 $mm^2/s$ bei 25°C bei einem pH-Wert von 6,5. Mit der doppelten Menge Wasser erhält man spontan eine schwach gelbliche klare Lösung, die ohne Ausfällungen weiter verdünnt werden kann.

Beispiel 3:

Beispiel 2 wird wiederholt mit der Abänderung, dass statt 8,02g Isophorondiamin jetzt 12,82 g Isophorondiamin eingesetzt werden. Nach quantitativem Umsatz der Epoxygruppen wird ein leicht gelbliches klares Öl erhalten, das mit einer Viskosität von nur 1.020 $mm^2/s$ bei 25°C erheblich dünner ist. Die Löslichkeitstests zeigen ein gleiches Ergebnis wie in Beispiel 2.

Beispiel 4:

($R^3$ = H , $R^4$ = $-C_2H_4-$ , x = 1 , n = 3)

134,2 g des Epoxysiloxans aus Beispiel 2 werden mit 6,41 g Triethylentetramin und 58 g Diethylenglykolmonobutylether gemischt und erwärmt, wobei die Mischung homogen wird. Nach 2,5 Stunden bei 130°C bleibt die stark erhöhte Viskosität konstant. Das Polymer ist in Toluol im Verhältnis 1:1 (Gewichtsteile) löslich. Es wird mit weiteren 82g Lösemittel auf 50% Siloxangehalt verdünnt und beim Abkühlen 11,6 g Essigsäure eingerührt. Es wird eine klare, kräftig gelb gefärbte Lösung mit einer Viskosität von 2.130 $mm^2/s$ bei 25°C erhalten, die 0,60 mequ. Aminstickstoff pro kg in protonierter Form enthält. Mit der dreifachen Menge Wasser lässt sich diese Lösung unter gutem Rühren in eine neutrale klare, wässrige Lösung überführen, die ohne Polymerausfällung mit Wasser weiter verdünnbar ist.

Beispiel 5:

($R^3$ = H , $R^4$ = $-C_3H_6-$ , x = 1 , n = 2)

197,8 g des Epoxysiloxans aus Beispiel 2 werden mit 7,64 g Bis-(3-aminopropyl)amin und 206 g Diethylenglykolmonobutylether sowie 5,8 g Isopropanol gemischt und erwärmt, wodurch ein homogenes Gemisch erhalten wird. Bei 130°C steigt die Viskosität über einen Zeitraum von 60 Minuten von 23 $mm^2/s$ bei 25°C auf den Endwert von 10.100 $mm^2/s$ bei 25°C an. Weiterer Viskositätsanstieg wird nicht beobachtet. Das Polymer ist in Toluol im Verhältnis 1:1 (Gewichtsteile) löslich. Im $^1H$-NMR-Spektrum ist keine Epoxyfunktion mehr erkennbar. Beim Abkühlen wird 11,5 g Essigsäure eingerührt. Die Siloxanpolymerlösung enthält 0,41 mequ. Aminstickstoff pro kg in protonierter Form. Mit der dreifachen Menge Wasser wird eine klare wässrige Lösung mit neutralem pH-Wert, die auch bei weiterer Verdünnung klar bleibt, erhalten.

Beispiel 6:

($R^3$ = H , $R^4$ = $-CH_2-C(CH_3)_2-CH_2-$ , x = 1 , n = 1)

52,1 g eines kurzkettigen Bis-(glycidyloxypropyl)-polydimethylsiloxans, wie es in Beispiel 1 verwendet wurde, wird mit 7,7 g Neopentandiamin gemischt. Die Mischung ist ohne Lösemittel bereits bei 25°C völlig klar. Bei 110°C sind nach 24 Stunden alle Epoxyfunktionen abreagiert. Das Polymer ist in Toluol im Verhältnis 1:1 (Gewichtsteile) löslich. Das farblose Öl wird mit 9,9 g Essigsäure neutralisiert und mit der 10-fachen Menge Wasser verdünnt. Es wird eine klare, farblose Lösung, frei von Glykolverbindungen, die problemlos weiter verdünnbar ist, erhalten. Das mit Essigsäure behandelte Öl ist in der gleichen Menge Isopropanol klar und vollständig löslich.

Beispiel 7:

($R^3$ = H , $R^4$ = $-CH_2-C(CH_3)_2-CH_2-$ , x = 1 , n = 1)

102,0 g eines $\alpha,\omega$-Epoxysiloxans mit 0,294 mequ. Glycidylgruppen pro kg und damit einer durchschnittlichen Kettenlänge von ca. 90 Siloxaneinheiten werden ohne Lösemittel mit 1,91 g Neopentandiamin homogen vermischt und bei 110°C 24 Stunden lang getempert. Es wird ein farbloses Hochpolymer mit einer Viskosität von mehr als 1.000 Pa.s bei 25°C erhalten. Das aminofunktionelle Siloxanpolymer hat eine Aminzahl von 0,35 (mequ./g) und ist in der zehnfachen Menge Toluol klar löslich, ohne dass sich Gelabscheidungen bilden. Das Hochpolymer wird mit der neunfachen Menge Isopropanol verdünnt und mit 2,5 g Essigsäure behandelt. Es wird eine klare Lösung mit neutralem pH-Wert erhalten.

Beispiel 8:

102,0 g des Epoxiöls aus Beispiel 2 werden mit 3,8g 3-Dimethylaminopropylamin und 3,0 g Isopropanol vermischt, drei Stunden bei 125°C gerührt und anschließend im Vakuum bei 120°C ausgeheizt. Das viskose Polymer wird mit 5,0 g Essigsäure gemischt und mit 103 g Isopropanol zu einer klaren Lösung verdünnt, die pro kg 0,35 g-Equivalent protonierten Stickstoff enthält.
30 g dieser Lösung werden unter starkem Rühren mit 70 g Wasser versetzt. Die klare wässrige Lösung ist mit weiterem Wasser problemlos weiter verdünnbar.

Beispiel 9:

In einem frisch gereinigten Glaskolben aus Borsilicatglas werden 50 ml deionisiertes Wasser gegeben und der verschlossene Kolben wird dann kräftig geschüttelt. Eine perfekte Benetzung der Kolbeninnenwand ist zu sehen. Der Glaskolben wird weitgehend entleert, nicht getrocknet, sondern mit 5 g der wässrigen Lösung aus Beispiel 2 möglichst vollständig auf der Innenseite benetzt. Danach wird der Kolben erneut entleert und fünfmal mit ca. 100 ml deionisiertem Wasser gespült. Erneut eingefülltes Wasser kann die Kolbeninnenwand jetzt nicht mehr benetzen. Durch Schütteln zwangsverteiltes Wasser perlt von der Glasoberfläche in Sekundenbruchteilen ab. Dieser Effekt bleibt auch nach drei Monaten unverändert bestehen.

Beispiel 10:

Das Beispiel 9 wird sinngemäß mit einer Glasplatte aus üblichem Fensterglas wiederholt. Die feuchte Glasplatte wird mit der wässrigen Lösung aus Beispiel 2 behandelt, indem einige ml der Lösung mit einem Schwamm über die Oberfläche gleichmäßig verteilt werden. Nach ausgiebigem Spülen mit Leitungswasser ist der hydrophobierende Effekt deutlich sichtbar. Auf die schräg gestellte Glasplatte gespritztes Wasser perlt augenblicklich ab.

Beispiel 11:

In der gleichen Weise wie die Glasplatte in Beispiel 10 wird nun eine unglasierte Fliese behandelt. Aufgebrachtes Leitungswasser kann die Oberfläche nicht mehr benetzen und perlt sofort ab.

Beispiel 12:

Eine Nylonplatte wird durch Tauchen in die wässrige Lösung aus Beispiel 2 oberflächenbehandelt. Nach ausgiebigem Spülen mit Leitungswasser perlt aufgespritztes Leitungswasser wesentlich schneller und vollständiger ab als von der unbehandelten Nylonoberfläche.

## Patentansprüche

1. Ammoniumgruppen aufweisende Organosiliciumverbindungen, die in Isopropanol oder Diethylenglycolmonobutylether löslich sind, enthaltend

(a) mindestens eine Struktureinheit der allgemeinen Formel

$$[-R^2-\overset{R_x^3}{\overset{|}{N}}(-R^4-\overset{R_x^3}{\overset{|}{N}})_n-R^2-] * m[H^+] * m[X^-] \quad (I)$$

wobei $R^2$ ein zweiwertiger organischer Rest, der eine durch eine Ringöffnung einer Epoxygruppe bedingte Hydroxylgruppe enthält, ist
$R^3$ ein Wasserstoffatom oder einen einwertigen Kohlenwasserstoffrest mit 1 bis 60 Kohlenstoffatomen je. Rest, der durch ein oder mehrere separate Heteroatome ausgewählt aus der Gruppe der Stickstoff-, Sauerstoff-, Schwefel- oder Halogenatome unterbrochen oder substituiert sein kann, bedeutet,
$R^4$ ein zweiwertiger Kohlenwasserstoffrest mit 1 bis 10 Kohlenstoffatomen je Rest ist,
n 0 oder eine ganze Zahl von 1 bis 10 ist
m eine ganze Zahl von 1 bis zur Gesamtanzahl der Stickstoffatome in (I) ist und
x gleich oder verschieden ist und 0 oder 1 ist,
$X^-$ ein Anion ist,

(b) mindestens eine Siloxaneinheit der allgemeinen Formel

$$R_a(R^1O)_bSiO_{\frac{4-(a+b)}{2}} \quad (II)$$

wobei R gleich oder verschieden ist und einen einwertigen gegebenenfalls halogenierten Kohlenwasserstoffrest mit 1 bis 18 Kohlenstoffatomen je Rest bedeutet,
$R^1$ gleich oder verschieden ist und einen einwertigen Kohlenwasserstoffrest mit 1 bis 8 Kohlenstoffatomen je Rest bedeutet,
a 0, 1, 2 oder 3 ist,
b 0, 1, 2 oder 3 ist,
mit der Maßgabe, dass die Summe $a+b \leq 3$ ist,
und

(c) mindestens zwei Siloxaneinheiten der allgemeinen Formel

$$R_a(R^1O)_bSiO_{\frac{3-(a+b)}{2}} \qquad (III)$$

wobei R, $R^1$, a und b die oben dafür angegebene Bedeutung haben,
mit der Maßgabe, dass die Summe $a+b \leq 2$ ist und
dass die Siloxaneinheiten der Formel (III) über die Siatome mit der Struktureinheit der Formel (I) über die Reste $R^2$ verbunden sind.

**2.** Ammoniumgruppen aufweisende Organosiliciumverbindungen nach Anspruch 1, **dadurch gekennzeichnet, dass** $R^2$ ein Rest der allgemeinen Formel

$$(Si)-(R^5)_z-CR^6(OH)-CR^6{}_2-(N) \qquad (VI)$$

oder

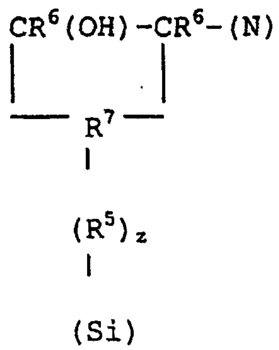

(VII)

ist, wobei (Si)- die Bindung zum Siliciumatom der Siloxaneinheit der Formel (III) und -(N) die Bindung zum Stickstoffatom der Struktureinheit der Formel (I) bedeutet,
$R^5$ ein zweiwertiger Kohlenwasserstoffrest mit 1 bis 10 Kohlenstoffatomen je Rest ist, der durch ein Ethersauerstoffatom substituiert sein kann,
$R^6$ ein Wasserstoffatom oder ein einwertiger Kohlenwasserstoffrest mit 1 bis 10 Kohlenstoffatomen je Rest ist, der durch ein Ethersauerstoffatom substituiert sein kann,
$R^7$ einen dreiwertigen Kohlenwasserstoffrest mit 3 bis 12 Kohlenstoffatomen je Rest ist und
z 0 oder 1 ist.

**3.** Ammoniumgruppen aufweisende Organosiliciumverbindungen nach Anspruch 1 oder 2, **dadurch gekennzeichnet, dass** $R^4$ ein Rest der Formel $-(CH_2)_3-$ ist.

**4.** Ammoniumgruppen aufweisende Organosiliciumverbindungen herstellbar indem
in einer ersten Stufe
(Poly)amine (1) der allgemeinen Formel

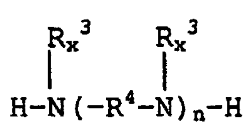

(IV)

wobei $R^3$, $R^4$, n und x die oben dafür angegebene Bedeutung haben, mit Epoxygruppen aufweisenden Organosiliciumverbindungen (2) enthaltend Einheiten der allgemeinen Formel

$$E_cR_a(R^1O)_bSiO_{\frac{4-(a+b+c)}{2}} \quad (V)$$

wobei R, $R^1$, a und b die im Anspruch 1 dafür angegebene Bedeutung haben, E gleich oder verschieden ist und einen einwertigen SiC-gebundenen organischen Rest, der eine Epoxygruppe enthält, bedeutet und c 0 oder 1 ist, mit der Maßgabe, dass die Summe $a+b+c \leq 3$ ist und dass mindestens ein Rest E je Molekül enthalten ist, umgesetzt werden, mit der Maßgabe, dass das eingesetzte Verhältnis von N-gebundenem Wasserstoff in (Poly)amin (1) zu Epoxygruppe in Organosiliciumverbindung (2) ein solches ist, dass in Toluol lösliche, Aminogruppen aufweisende Organosiliciumverbindungen erhalten werden, und in einer zweiten Stufe die in der ersten Stufe erhaltenen Aminogruppen aufweisenden Organosiliciumverbindungen durch Zugabe von Säure (4) teilweise oder ganz protoniert werden, wobei Ammoniumgruppen aufweisende Organosiliciumverbindungen, die in Isopropanol oder Diethylenglycolmonobutylether löslich sind, erhalten werden.

5. Verfahren zur Herstellung der Ammoniumgruppen aufweisenden Organosiliciumverbindungen nach einem der Ansprüche 1 bis 4, **dadurch gekennzeichnet, dass** in einer ersten Stufe (Poly)amine (1) der allgemeinen Formel

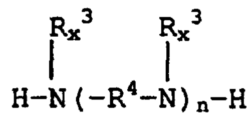

(IV)

wobei $R^3$, $R^4$, n und x die oben dafür angegebene Bedeutung haben, mit Epoxygruppen aufweisenden Organosiliciumverbindungen (2) enthaltend Einheiten der allgemeinen Formel

$$E_cR_a(R^1O)_bSiO_{\frac{4-(a+b+c)}{2}} \quad (V)$$

wobei R, $R^1$, a und b die oben dafür angegebene Bedeutung haben, E gleich oder verschieden ist und einen einwertigen SiC-gebundenen organischen Rest, der eine Epoxygruppe enthält, bedeutet und c 0 oder 1 ist, mit der Maßgabe, dass die Summe $a+b+c \leq 3$ ist und dass mindestens ein Rest E je Molekül enthalten ist, umgesetzt werden, mit der Maßgabe, dass das eingesetzte Verhältnis von N-gebundenem Wasserstoff in (Poly)amin (1) zu Epoxygruppe in Organosiliciumverbindung (2) ein solches ist, dass in Toluol lösliche, Aminogruppen aufweisende Organosiliciumverbindungen erhalten werden, und in einer zweiten Stufe die in der ersten Stufe erhaltenen Aminogruppen aufweisenden Organosiliciumverbindungen durch Zugabe von Säure (4) teilweise oder ganz protoniert werden, wobei Ammoniumgruppen aufweisende Organosiliciumverbindungen, die in Isopropanol oder Diethylenglycolmonobutylether löslich sind, erhalten werden.

6. Verfahren nach Anspruch 5, **dadurch gekennzeichnet, dass** E ein Rest der Formel

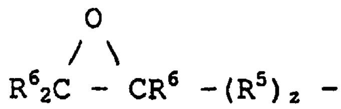 (VI)

oder

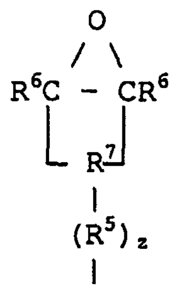 (VII)

ist, wobei $R^5$, $R^6$, $R^7$ und z die oben dafür angegebene Bedeutung haben.

7. Verfahren nach Anspruch 5 oder 6, **dadurch gekennzeichnet, dass** $R^4$ ein Rest der Formel $-(CH_2)_3-$ ist.

8. Verfahren zur Imprägnierung von organischen Fasern mit Organosiliciumverbindungen nach einem der Ansprüche 1 bis 4.

9. Verfahren zur Imprägnierung von silikatischen Oberflächen mit Organosiliciumverbindungen nach einem der Ansprüche 1 bis 4.

## Claims

1. Ammonio-containing organosilicon compounds which are soluble in isopropanol or diethylene glycol monobutyl ether and contain

(a) at least one structural unit of the general formula

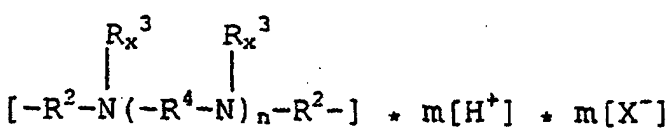 (I)

where $R^2$ is a divalent organic radical which contains a hydroxyl group from a ring-opening of an epoxy group,
$R^3$ is a hydrogen atom or a monovalent hydrocarbon radical having 1 to 60 carbon atoms per radical which may be interrupted or substituted by one or more separate hetero atoms selected from the group consisting of nitrogen, oxygen, sulphur and halogen,
$R^4$ is a divalent hydrocarbon radical having 1 to 10 carbon atoms per radical,
n is 0 or an integer from 1 to 10,
m is an integer from 1 to the total number of nitrogen atoms in (I), and
each x is the same or different and represents 0 or 1,
$X^-$ is an anion

(b) at least one siloxane unit of the general formula

$$R_a(R^1O)_bSiO_{\frac{4-(a+b)}{2}} \quad (II)$$

where each R is the same or different and represents a monovalent optionally halogenated hydrocarbon radical having 1 to 18 carbon atoms,

each $R^1$ is the same or different and represents a monovalent hydrocarbon radical having 1 to 8 carbon atoms per radical,

a is 0, 1, 2 or 3,

b is 0, 1, 2 or 3,

with the proviso that the sum of a+b is ≤ 3,

and

(c) at least two siloxane units of the general formula

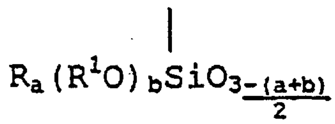

(III)

where R, $R^1$, a and b are each as defined above,

with the proviso that the sum of a+b is ≤ 2 and that the siloxane units of the formula (III) are bonded through the silicon atoms to the structural unit of the formula (I) through the $R^2$ radicals.

2. Ammonio-containing organosilicon compounds according to Claim 1, **characterized in that** $R^2$ is a radical of the general formula

$$(Si)\text{-}(R^5)_z\text{-}CR^6(OH)\text{-}CR^6{}_2\text{-}(N) \quad (VI)$$

or

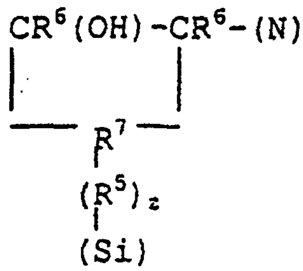

(VII)

where (Si)- is the bond to the silicon atom of the siloxane unit of the formula (III) and -(N) is the bond to the nitrogen atom of the structural unit of the formula (I),

$R^5$ is a divalent hydrocarbon radical having 1 to 10 carbon atoms per radical which may be substituted by an ether oxygen atom,

$R^6$ is a hydrogen atom or a monovalent hydrocarbon radical having 1 to 10 carbon atoms per radical which may be substituted by an ether oxygen atom,

$R^7$ is a tervalent hydrocarbon radical having 3 to 12 carbon atoms per radical and

z is 0 or 1.

3. Ammonio-containing organosilicon compounds according to Claim 1 or 2, **characterized in that** $R^4$ is a radical of the formula $-(CH_2)_3-$.

4. Ammonio-containing organosilicon compounds preparable by
in a first stage reacting

(poly)amines (1) of the general formula

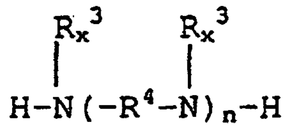 (IV)

where $R^3$, $R^4$, n and x are each as defined above, with epoxy-containing organosilicon compounds (2) containing units of the general formula

$$E_cR_a(R^1O)_bSiO_{\frac{4-(a+b+c)}{2}} \qquad (V)$$

where R, $R^1$, a and b are each as defined in Claim 1,
each E is the same or different and represents a monovalent SiC-attached organic radical which contains an epoxy group, and
c is 0 or 1,
with the proviso that the sum of a+b+c is ≤ 3 and that at least one E radical is present per molecule,
with the proviso that the employed ratio of N-attached hydrogen in (poly)amine (1) to epoxy group in organosilicon compound (2) is such that toluene-soluble amino-containing organosilicon compounds are obtained,
and in a second stage protonating
the amino-containing organosilicon compounds obtained in the first stage by addition of acid (4) partially or fully, ammonio-containing organosilicon compounds being obtained that are soluble in isopropanol or diethylene glycol monobutyl ether.

5. Process for preparing the ammonio-containing organosilicon compounds according to any of Claims 1 to 4, **characterized in that** it comprises in a first stage reacting
(poly)amines (1) of the general formula

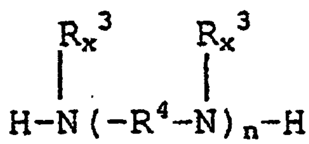 (IV)

where $R^3$, $R^4$, n and x are each as defined above, with epoxy-containing organosilicon compounds (2) containing units of the general formula

$$E_cR_a(R^1O)_bSiO_{\frac{4-(a+b+c)}{2}} \qquad (V)$$

where R, $R^1$, a and b are each as defined above,
each E is the same or different and represents a monovalent SiC-attached organic radical which contains an epoxy group, and
c is 0 or 1,
with the proviso that the sum of a+b+c is ≤ 3 and that at least one E radical is present per molecule, with the proviso that the employed ratio of N-attached hydrogen in (poly)amine (1) to epoxy group in organosilicon compound (2) is such that toluene-soluble amino-containing organosilicon compounds are obtained,
and in a second stage protonating
the amino-containing organosilicon compounds obtained in the first stage by addition of acid (4) partially or fully, ammonio-containing organosilicon compounds being obtained that are soluble in isopropanol or diethylene glycol monobutyl ether.

6. Process according to Claim 5, **characterized in that** E is a radical of the formula

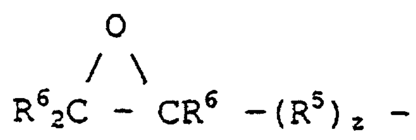

(VI)

or

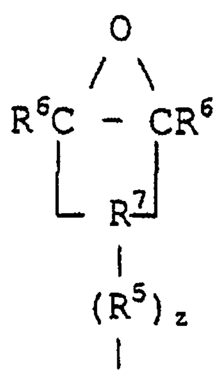

(VII)

where $R^5$, $R^6$, $R^7$ and z are each as defined above.

7. Process according to Claim 5 or 6, **characterized in that** $R^4$ is a radical of the formula $-(CH_2)_3-$.

8. Process for impregnating organic fibres with organosilicon compounds according to any of Claims 1 to 4.

9. Process for impregnating silicatic surfaces with organosilicon compounds according to any of Claims 1 to 4.

**Revendications**

1. Composés organosiliciés renfermant des groupes ammonium qui sont solubles dans l'isopropanol ou l'éther monobutylique de diéthylèneglycol, et comprenant,

   (a) au moins un motif structural de formule générale

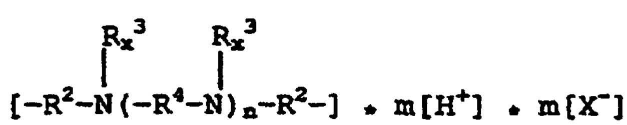

(I)

dans laquelle $R^2$ représente un radical organique bivalent renfermant un groupe hydroxy provenant d'une décyclisation d'un groupe époxy,
$R^3$ représente un atome d'hydrogène ou un radical hydrocarboné monovalent ayant de 1 à 60 atomes de carbone par radical, qui peut être interrompu ou substitué par un ou plusieurs hétéroatomes séparés choisis parmi le groupe constitué des atomes d'azote, d'oxygène, de soufre ou d'halogène,
$R^4$ représente un radical hydrocarboné bivalent ayant de 1 à 10 atomes de carbone par radical,
n vaut 0 ou représente un entier de 1 à 10,
m représente un entier de 1 jusqu'au nombre total d'atomes d'azote dans (I), et
x est identique ou différent et vaut 0 ou 1,
$X^-$ représente un anion,

(b) au moins un motif siloxane de formule générale

$$R_a(R^1O)_bSiO_{\frac{4-(a+b)}{2}} \quad (II)$$

dans laquelle R est identique ou différent et représente un radical hydrocarboné monovalent éventuellement halogéné ayant de 1 à 18 atomes de carbone par radical,
$R^1$ est identique ou différent et représente un radical hydrocarboné monovalent ayant de 1 à 8 atomes de carbone par radical,
a vaut 0, 1, 2 ou 3,
b vaut 0, 1, 2 ou 3,
à condition que la somme $a + b \leq 3$,
et

(c) au moins deux motifs siloxane de formule générale

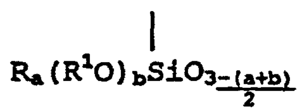

(III)

dans laquelle R, $R^1$, a et b présentent la signification indiquée ci-dessus à cet effet,
à condition que la somme $a + b \leq 2$ et que les motifs siloxane de formule (III) soient liés par les atomes de silicium au motif structural de formule (I) par l'intermédiaire des radicaux $R^2$.

**2.** Composés organosiliciés renfermant des groupes ammonium selon la revendication 1, **caractérisés en ce que** $R^2$ représente un radical de formules générales

$$(Si)\text{-}(R^5)_z\text{-}CR^6(OH)\text{-}CR^6{}_2\text{-}(N) \quad (VI)$$

ou

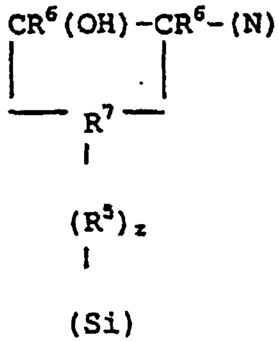

(VII)

dans lesquelles (Si)- représente la liaison à l'atome de silicium du motif siloxane de formule (III) et -(N) représente la liaison à l'atome d'azote du motif structural de formule (I),
$R^5$ représente un radical hydrocarboné bivalent ayant de 1 à 10 atomes de carbone par radical, qui peut être substitué par un atome d'oxygène d'éther, $R^6$ représente un atome d'hydrogène ou un radical hydrocarboné monovalent ayant de 1 à 10 atomes de carbone par radical, qui peut être substitué par un atome d'oxygène d'éther,

$R^7$ représente un radical hydrocarboné trivalent ayant de 3 à 12 atomes de carbone par radical, et
z vaut 0 ou 1.

**3.** Composés organosiliciés renfermant des groupes ammonium selon la revendication 1 ou 2, **caractérisés en ce que** $R^4$ représente un radical de formule $-(CH_2)_3-$.

**4.** Composés organosiliciés renfermant des groupes ammonium, pouvant être préparés en ce que
dans une première étape
des (poly)amines (1) de formule générale

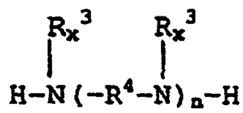

(IV)

dans laquelle $R^3$, $R^4$, n et x présentent la signification indiquée ci-dessus à cet effet,
sont mises à réagir avec des composés organosiliciés renfermant des groupes époxy (2), renfermant des motifs de formule générale

$$E_cR_a(R^1O)_bSiO_{\frac{4-(a+b+c)}{2}} \quad (V)$$

dans laquelle R, $R^1$, a et b présentent la signification indiquée dans la revendication 1 à cet effet,
E est identique ou différent et représente un radical organique monovalent lié à SiC, qui renferme un groupe époxy, et
c vaut 0 ou 1,
à condition que la somme $a + b + c \leq 3$ et qu'au moins un radical E soit présent par molécule,
à condition que le rapport employé entre hydrogène lié à l'azote dans la (poly)amine (1) et groupe époxy dans le composé organosilicié (2) soit tel que l'on obtienne des composés organosiliciés renfermant des groupes amino solubles dans le toluène,
et dans une deuxième étape,
les composés organosiliciés renfermant des groupes amino, obtenus dans la première étape, sont protonés partiellement ou totalement par addition d'acide (4), ce que par quoi on obtient des composés organosiliciés renfermant des groupes ammonium qui sont solubles dans l'isopropanol ou l'éther monobutylique de diéthylèneglycol.

**5.** Procédé de préparation des composés organosiliciés renfermant des groupes ammonium selon l'une quelconque des revendications 1 à 4, **caractérisé en ce que**
dans une première étape
des (poly)amines (1) de formule générale

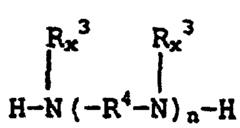

(IV)

dans laquelle $R^3$, $R^4$, n et x présentent la signification indiquée ci-dessus à cet effet,
sont mises à réagir avec des composés organosiliciés renfermant des groupes époxy (2), renfermant des motifs de formule générale

$$E_cR_a(R^1O)_bSiO_{\frac{4-(a+b+c)}{2}} \qquad (V)$$

dans laquelle R, $R^1$, a et b présentent la signification indiquée ci-dessus à cet effet,
E est identique ou différent et représente un radical organique monovalent lié à SiC, qui renferme un groupe époxy, et
c vaut 0 ou 1,
à condition que la somme $a + b + c \leq 3$ et qu'au moins un radical E soit présent par molécule,
à condition que le rapport employé entre hydrogène lié à l'azote dans la (poly)amine (1) et groupe époxy dans le composé organosilicié (2) soit tel que l'on obtienne des composés organosiliciés renfermant des groupes amino solubles dans le toluène,
et dans une deuxième étape,
les composés organosiliciés renfermant des groupes amino, obtenus dans la première étape, sont protonés partiellement ou totalement par addition d'acide (4), ce que par quoi on obtient des composés organosiliciés renfermant des groupes ammonium qui sont solubles dans l'isopropanol ou l'éther monobutylique de diéthylèneglycol.

6. Procédé selon la revendication 5, **caractérisé en ce que** E représente un radical de formules

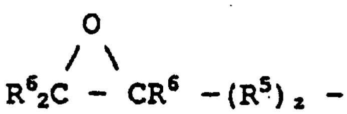

(VI)

ou

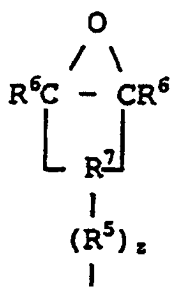

(VII)

dans lesquelles $R^5$, $R^6$, $R^7$ et z présentent la signification indiquée ci-dessus à cet effet.

7. Procédé selon la revendication 5 ou 6, **caractérisé en ce que** $R^4$ représente un radical de formule $-(CH_2)_3-$.

8. Procédé d'imprégnation de fibres organiques avec des composés organosiliciés selon l'une quelconque des revendications 1 à 4.

9. Procédé d'imprégnation de surfaces silicatées avec des composés organosiliciés selon l'une quelconque des revendications 1 à 4.